# EUROPEAN PATENT APPLICATION

(11) **EP 2 574 087 A1**
(43) Date of publication of application: **27.03.2013**
(21) Application number: 11789087.1
(22) Date of filing: 14.03.2011
(51) Int. Cl.: H04W 4/12

(54) **METHOD AND SYSTEM FOR INDICATING TRANSMISSION INTERVAL FORMAT SEQUENCE**

(30) Priority: 01.06.2010 CN 201010191765
(71) Applicant: ZTE Corporation, Shenzhen, Guangdong 518057 (CN)
(72) Inventor: KE, Yazhu, Guangdong 518057 (CN); CHENG, Xiang, Guangdong 518057 (CN); LIU, Lin, Guangdong 518057 (CN)
(74) Representative: Patarin, Stephanie
(86) International application number: PCT/CN2011/071777
(87) International publication number: WO 2011/150708

(57) **Abstract**

The present invention discloses a method and a system for indicating a transmission gap pattern sequence. Both communication parties acquire a configured corresponding relation between a transmission gap pattern sequence combination and an identifier of the transmission gap pattern sequence combination. The method comprises: when one of the two communication parties determines to start/stop a transmission gap pattern sequence, determining a transmission gap pattern sequence combination to be started/stopped and notifying the identifier of the determined transmission gap pattern sequence combination to be started/stopped to the other one of the two communication parties; according to the identifier of the determined transmission gap pattern sequence combination, the other communication party starting/stopping each transmission gap pattern sequence in the corresponding transmission gap pattern sequence combination. With the method and system in the present invention, indications of multiple transmission gap pattern sequences between a base station and a user equipment can be realized.

## Description

### Field of the Invention

The present invention relates to a technology for indicating a transmission gap pattern in a radio communication system, in particular to a method and a system for indicating a transmission gap pattern in a high speed downlink packet access system.

### Background of the Invention

With the evolvement of the radio network communication technology, from the second generation Global System for Mobile communication (GSM) to the third generation Wideband Code Division Multiple Access (WCDMA) system, then to the third Enhanced Universal Radio Access (E-UTRA) system, according to users' demands, multiple systems coexist in the network deployment of operators. At present, the radio network functions of the operators are usually provided like this: the second generation GSM system is mainly used for carrying the voice; the third generation WCDMA system is mainly used for carrying Packet Switched (PS) domain services, conversational services and video services; and the third generation E-UTRAN system is mainly used for carrying super-speed PS domain services.

Therefore, according to the current network deployment, the mobility between the second generation GSM system and the third generation WCDMA system is very important. Moreover, what can be predicated is that: in the near future, the mobility management of the third generation E-UTRA system, for example, the management of switching to the hot spot region of the E-UTRA system, will also become important. At the same time, the inter-frequency switching based on the load balancing among carrier frequencies of respective layers is also necessary in a multi-carrier frequency network.

The switching process caused by the above mobility management among the systems and the load balancing among carrier frequencies of respective layers all require the measurement for the target system and the target carrier frequency in the prior switching preparatory stage so as to make an accurate switching decision.

A compressed mode plays an important role in the inter-carrier frequency measurement and inter-RAT measurement. When the compressed mode is adopted, the user equipment can measure the non-serving carrier frequencies and the carrier frequencies of other systems without any need to be configured with dual receivers. When a user equipment configured with only one receiver moves from the third generation WCDMA system to the area only covered with the second generation GSM system, it can only adopt the compressed mode to perform the inter-RAT measurement. Likewise, the compressed mode can also be used for the carrier frequency measurement when the user equipment moves into or out of the area covered with the multi-carrier frequencies of the third generation WCDMA system. In the compressed mode, the user equipment can perform measurement of another non-serving carrier frequency without losing any data transmitted on the serving carrier frequency.

The compressed mode is defined as a transmission mode through which the data transmission will be compressed in the time domain and a transmission gap will be generated. The receiver of the user equipment can tune to another carrier frequency to perform measurement by using this transmission gap.

The transmission gap is generally described and determined by a transmission gap pattern sequence. Each set of the transmission gap pattern sequence is uniquely identified by a transmission gap pattern sequence identifier. Each set of the transmission gap pattern sequence can only be used for one kind of transmission gap pattern sequence measurement purpose, namely one of the measurement purposes of Frequency-Division Duplex measurement, Time-Division Duplex measurement, GSM Carrier Received Signal Strength Indication (RSSI) measurement, GSM Initial Base Station Identity Code Identification, GSM Base Station Identity Code Identification Reconfirmation, multi-carrier frequency measurement, E-UTRA measurement and so on.

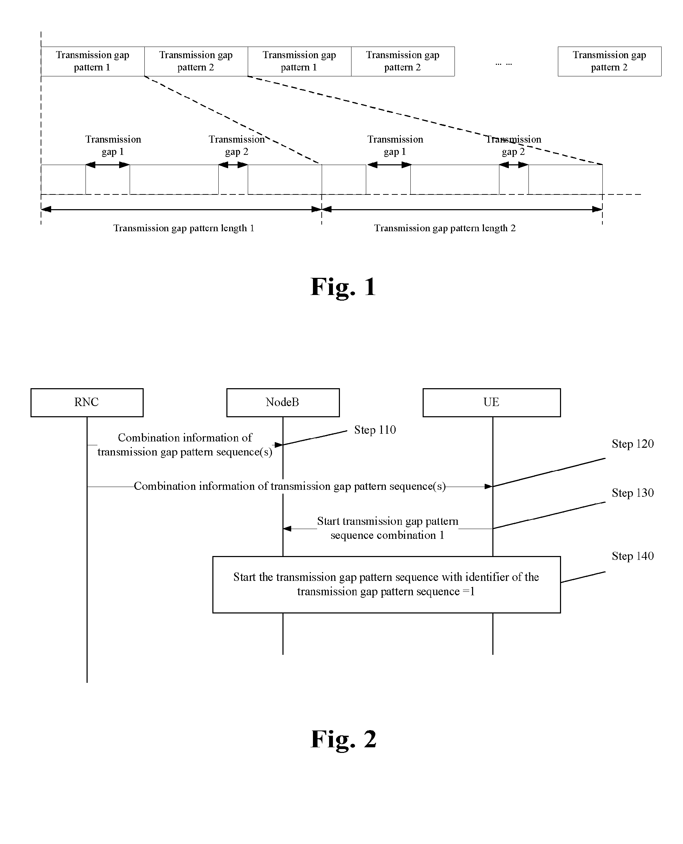

Fig. 1 is a schematic diagram of the transmission gap pattern sequence. As shown in Fig. 1, each set of transmission gap pattern sequence comprises two kinds of alternate transmission gap patterns, i.e. Transmission Gap Pattern 1 and Transmission Gap Pattern 2. Each kind of transmission gap pattern provides one or two transmission gaps within one transmission gap pattern length. In addition, each set of transmission gap pattern sequence also comprises a transmission gap Connection Frame Number (CFN) indicating the start/stop time of the compressed mode, and repetition times of the transmission gap pattern, etc. These parameters are all determined according to the transmission gap pattern sequence measurement purpose.

As each transmission gap pattern sequence measurement purpose needs one set of transmission gap pattern sequence, when multiple kinds of measurements are performed simultaneously, for example, when the GSM Carrier Received Signal Strength Indication measurement and the GSM Initial Base Station Identity Code Identification measurement are performed simultaneously, there may be a case in which respective sets of transmission gap pattern sequences are simultaneously performed in parallel. In this case, it is necessary to ensure that each set of transmission gap pattern sequence does not overlap with each other, or, each transmission gap described and determined by each set of transmission gap pattern sequence cannot fall in a same radio frame. Otherwise, the user equipment is unable to complete measurement related to the overlapped transmission gap pattern sequence.

In the related art, a Radio Network Controller (RNC) holds the control right of starting and stopping the compressed mode. The user equipment reports the radio signal quality of the current serving cell/carrier frequency to the RNC. When the radio signal quality of the current serving cell/carrier frequency is lower than a certain threshold, the RNC judges whether to perform the inter-carrier frequency/inter-RAT measurement (if the radio signal quality of the current serving cell is not so good, it may need to get ready for switching to an inter-carrier frequency/inter-RAT neighboring cell). If the inter-carrier frequency/inter-RAT measurement is required, the RNC notifies the started transmission gap pattern sequence to the NodeB (base station) and the user equipment. The NodeB does not send data in each transmission gap described and determined by the transmission gap pattern sequence, the user equipment does not receive data in each transmission gap described and determined by the transmission gap pattern sequence but performs the inter-carrier frequency/inter-RAT measurement in the transmission gap pattern sequence measurement purpose. After the RNC obtains the measurement result of the inter-carrier frequency/inter-RAT measurement from the user equipment, it may decide to stop the transmission gap pattern sequence and notify the NodeB and the user equipment. The NodeB and the user equipment exit the compressed mode and send and receive data normally.

During the above process, in terms of engineering, it is usually needed to start the compressed mode in advance, that is, the threshold of the startup of the compressed mode needs to be set in such a way that the compressed mode can be triggered easily, so as to ensure that there is enough time to complete the inter-carrier frequency/inter-RAT measurement before a call drop of the user equipment (that is, a period in which the conversation of the user equipment can be held). As a result, the coverage border of the cell is reduced, the cell coverage cannot be utilized effectively, and the long duration of the compressed mode brings negative effects to the system capacity and the user throughput.

Considering that the switching reliability can be increased by speeding up the switching process, especially in the area where the radio signal quality is deteriorating rapidly, the risk of the user's call drop can be reduced by speeding up the switching process. In order to improve the system capacity and user throughput, the later the compressed mode is started, the better it is; and the shorter the duration time of the compressed mode is, the better it is. Therefore, one existing possible optimization technology is: the control right put in the RNC in the related art is moved to the user equipment, and the startup/stop of the compressed mode is controlled by the user equipment (if the user equipment judges that the radio signal quality of the current serving cell is not so good, it may need to get ready for switching to an inter-carrier frequency/inter-RAT neighboring cell, so the user equipment starts the compressed mode; if the user equipment judges that the radio signal quality of the current serving cell gets better or the measurement result has been obtained, the user equipment stops the compressed mode). Correspondingly, when the user equipment decides to start/stop the compressed mode, the user equipment notifies the transmission gap pattern sequence to be started/stopped to the NodeB. Moreover, due to causes at the system side unpredicted by the user equipment, such as load balance, the NodeB may decide to start/stop the compressed mode. When the NodeB decides to start/stop the compressed mode, the NodeB notifies the transmission gap pattern sequence to be started/stopped to the user equipment. Hereafter, the NodeB does not send data in each transmission gap described and determined by the transmission gap pattern sequence, the user equipment does not receive data in each transmission gap described and determined by the transmission gap pattern sequence but performs the inter-carrier frequency/inter-RAT measurement in the transmission gap pattern sequence measurement purpose.

However, such optimization technology has the following problems when implemented in the engineering: the transmission gap pattern sequence measurement purpose to which the transmission gap pattern sequence is applied may be: various measurement purposes, such as Frequency-Division Duplex measurement or Time-Division Duplex measurement or GSM Carrier Received Signal Strength Indication measurement or GSM Initial Base Station Identity Code Identification or GSM Base Station Identity Code Identification Reconfirmation or multi-carrier frequency measurement or E-UTRA measurement. When measurements in more than two measurement purposes are performed simultaneously, for example, when measurements in Frequency-Division Duplex measurement purpose and carrier frequency measurement purpose are performed simultaneously, or, for example, when measurements in GSM Carrier Received Signal Strength Indication measurement purpose, GSM Initial Base Station Identity Code Identification measurement purpose and GSM Base Station Identity Code Identification Reconfirmation measurement purpose are performed simultaneously, that is, in a case that respective sets of transmission gap pattern sequences are simultaneously performed in parallel, it is necessary to ensure that each set of transmission gap pattern sequence does not overlap with each other, or, each transmission gap described and determined by each set of transmission gap pattern sequence cannot fall in a same radio frame. Otherwise, the user equipment is unable to complete measurement related to the overlapped transmission gap pattern sequence.

In the related art, in a case that the RNC computes and evaluates the transmission gap according to the radio resource management algorithm to decide to simultaneously perform respective sets of transmission gap pattern sequences in parallel, it is able to ensure that each set of transmission gap pattern sequence does not overlap with each other, or, each transmission gap described and determined by each set of transmission gap pattern sequence does not fall in a same radio frame. Fast processor computing capacity is required to complete the radio resource management algorithm, and large memory is occupied.

While in such optimization technology, the user equipment and the NodeB are limited in both the processor computing capacity and the memory, and the processing capacity thereof cannot reach that of the RNC, therefore the user equipment and the NodeB are unable to complete the radio resource management algorithm. It also means that, in such optimization technology, the user equipment can only perform the measurement in a single measurement purpose; as a result, such optimization technology is infeasible in the engineering application.

### Summary of the Invention

In view of the above, the present invention provides a method and a system for indicating a transmission gap pattern sequence, which can determine more than two transmission gap pattern sequences to be started/stopped between the user equipment and the base station side, and decrease the consumption of the resources used for decision.

The technical solution of the present invention is realized as follows.

A method for indicating a transmission gap pattern sequence is provided, two communication parties acquire a configured corresponding relation between a transmission gap pattern sequence combination and an identifier of the transmission gap pattern sequence combination; the method comprises:
when one of the two communication parties determines to start/stop a transmission gap pattern sequence, determining a transmission gap pattern sequence combination to be started/stopped and notifying the identifier of the determined transmission gap pattern sequence combination to be started/stopped to the other one of the two communication parties; according to the identifier of the determined transmission gap pattern sequence combination, the other communication party starting/stopping each transmission gap pattern sequence in the corresponding transmission gap pattern sequence combination.

Preferably, the step that two communication parties acquire the configured corresponding relation between the transmission gap pattern sequence combination and the identifier of the transmission gap pattern sequence combination comprises:
a radio network controller determining a transmission gap pattern sequence, configuring the corresponding relation between the transmission gap pattern sequence combination and the identifier of the transmission gap pattern sequence combination, and notifying the corresponding relation to the two communication parties in advance.

Preferably, one of the two communication parties is a user equipment and the other one of the two communication parties is a base station;
when determining to start/stop the transmission gap pattern sequence combination, the user equipment notifies the identifier of the transmission gap pattern sequence combination to be started/stopped to the base station; according to the identifier of the transmission gap pattern sequence combination, the base station determines each transmission gap pattern sequence in the transmission gap pattern sequence combination notified by the user equipment, and starts/stops each transmission gap pattern sequence in the transmission gap pattern sequence combination notified by the user equipment.

Preferably, one of the two communication parties is a base station and the other one of the two communication parties is a user equipment;
when determining to start/stop the transmission gap pattern sequence combination, the base station notifies the identifier of the transmission gap pattern sequence combination to be started/stopped to the user equipment; according to the identifier of the transmission gap pattern sequence combination, the user equipment determines each transmission gap pattern sequence in the transmission gap pattern sequence combination notified by the base station, and starts/stops each transmission gap pattern sequence in the transmission gap pattern sequence combination notified by the base station.

Preferably, there are one or more transmission gap pattern sequences in the transmission gap pattern sequence combination.

Preferably, the method further comprises:
during a process that a base station and a user equipment start a transmission gap pattern sequence in the transmission gap pattern sequence combination, when receiving startup of other transmission gap pattern sequence combination, stopping each transmission gap pattern sequence in a current transmission gap pattern sequence combination.

A system for indicating a transmission gap pattern sequence is provided, the system is applied in a radio communication system and comprises: a setting unit, and an acquisition unit, a first determination unit, a first notification unit, a second determination unit and an execution unit, which are arranged in two communication parties in the radio communication system; wherein,
the setting unit is configured to set a transmission gap pattern sequence combination and an identifier of the transmission gap pattern sequence combination;
the acquisition unit is configured to acquire a corresponding relation between the transmission gap pattern sequence combination and the identifier of the transmission gap pattern sequence combination;
the first determination unit is configured to trigger the first notification unit when one of the two communication parties determines to start/stop a transmission gap pattern sequence combination;
the first notification unit is configured to notify the identifier of the transmission gap pattern sequence combination to be started/stopped to the other one of the two communication parties;
the second determination unit is configured to: according to the identifier of the transmission gap pattern sequence combination, determine each transmission gap pattern sequence in the transmission gap pattern sequence combination notified by the first notification unit; and
the execution unit is configured to start/stop each transmission gap pattern sequence, determined by the second determination unit, in the transmission gap pattern sequence combination.

Preferably, the system further comprises:
a second notification unit, arranged in a radio network controller, configured to notify the corresponding relation between the transmission gap pattern sequence combination and the identifier of the transmission gap pattern sequence combination set by the setting unit to the two communication parties; and one of the two communication parties is a user equipment and the other one of the two communication parties is a base station.

Preferably, there are one or more transmission gap pattern sequences in the transmission gap pattern sequence combination.

Preferably, the execution unit is further configured to: during a process of starting a transmission gap pattern sequence in the transmission gap pattern sequence combination, when a user equipment and a base station receive startup of other transmission gap pattern sequence combination through the first notification unit, stop a current transmission gap pattern sequence.

In the present invention, the base station and the user equipment acquire a configured corresponding relation between a transmission gap pattern sequence combination and an identifier of the transmission gap pattern sequence combination in advance. In this way, when the user equipment or the base station side decides to start/stop a certain transmission gap pattern sequence combination, it notifies the identifier information corresponding to the combination to the opposite end. According to the acquired identifier of the combination, the user equipment or the base station can determine each specific transmission gap pattern sequence in the transmission gap pattern sequence combination to be started/stopped, and then starts/stops each determined specific transmission gap pattern sequence. The present invention solves the technical defect in the existing communication system that the user equipment can only perform the measurement according to a single transmission gap pattern sequence, so that the user equipment can simultaneously perform measurement in multiple measurement purposes according to two or more transmission gap pattern sequences, and the switching behavior can be ensured to meet the expectation of the network operators under an inter-carrier frequency/inter-RAT networking environment.

### Brief Description of the Drawings

Fig. 1 shows a structure diagram of a transmission gap pattern sequence;
Fig. 2 shows a flow chart of embodiment 1 of a method for indicating a transmission gap pattern sequence in the present invention;
Fig. 3 shows a flow chart of embodiment 2 of a method for indicating a transmission gap pattern sequence in the present invention;
Fig. 4 shows a flow chart of embodiment 3 of a method for indicating a transmission gap pattern sequence in the present invention;
Fig. 5 shows a flow chart of embodiment 4 of a method for indicating a transmission gap pattern sequence in the present invention;
Fig. 6 shows a flow chart of embodiment 5 of a method for indicating a transmission gap pattern sequence in the present invention;
Fig. 7 shows a flow chart of embodiment 6 of a method for indicating a transmission gap pattern sequence in the present invention;
Fig. 8 shows a flow chart of embodiment 7 of a method for indicating a transmission gap pattern sequence in the present invention;
Fig. 9 shows a flow chart of embodiment 8 of a method for indicating a transmission gap pattern sequence in the present invention;
Fig. 10 shows a constitutional structure diagram of embodiment 1 of a system for indicating a transmission gap pattern sequence in the present invention;
Fig. 11 shows a constitutional structure diagram of embodiment 2 of a system for indicating a transmission gap pattern sequence in the present invention.

### Detailed Description of the Embodiments

To make the technical solution and the advantages of the present invention more clear, the present invention will be further described in details below with reference to embodiments and drawings.

In the embodiment of the present invention, first, corresponding relation between transmission gap pattern sequence combination information and an identifier of the transmission gap pattern sequence combination is configured. The specific corresponding relation is as shown in Table 1:

**Table 1**

| Identifier of the transmission gap pattern sequence combination | Transmission gap pattern sequence members in the transmission gap pattern sequence combination |
|---|---|
| Identifier of the transmission gap | The number of members is 1: |
| pattern sequence combination=1 | identifier of the transmission gap pattern sequence =1 (measurement purpose: Frequency-Division Duplex measurement) |
| Identifier of the transmission gap pattern sequence combination=2 | The number of members is 1: |
| | identifier of the transmission gap pattern sequence =2 (measurement purpose: Time-Division Duplex measurement) |
| Identifier of the transmission gap pattern sequence combination=3 | The number of members is 1: |
| | identifier of the transmission gap pattern sequence =3 (measurement purpose: GSM Carrier Received Signal Strength Indication measurement) |
| Identifier of the transmission gap pattern sequence combination=4 | The number of members is 1: |
| | identifier of the transmission gap pattern sequence =4 (measurement purpose: GSM Initial Base Station Identity Code Identification) |
| Identifier of the transmission gap pattern sequence combination=5 | The number of members is 1: |
| | identifier of the transmission gap pattern sequence =5 (measurement purpose: GSM Base Station Identity Code Identification Reconfirmation) |
| Identifier of the transmission gap pattern sequence combination=6 | The number of members is 1: |
| | identifier of the transmission gap pattern sequence =6 (measurement purpose: multi-carrier frequency measurement) |
| Identifier of the transmission gap pattern sequence combination=7 | The number of members is 1: |
| | identifier of the transmission gap pattern sequence =6 (measurement purpose: E-UTRA measurement) |
| Identifier of the transmission gap pattern sequence combination=8 | The number of members is 3, respectively: |
| | identifier of the transmission gap pattern sequence =3 (measurement purpose: GSM Carrier Received Signal Strength Indication measurement); |
| | identifier of the transmission gap pattern sequence =4 (measurement purpose: GSM Initial Base Station Identity Code Identification); |
| | identifier of the transmission gap pattern sequence =5 (measurement purpose: GSM Base Station Identity Code Identification Reconfirmation) |
| Identifier of the transmission gap pattern sequence combination=9 | The number of members is 4, respectively: |
| | identifier of the transmission gap pattern sequence =1 (measurement purpose: Frequency-Division Duplex measurement); |
| | identifier of the transmission gap pattern sequence =3 (measurement purpose: GSM Carrier Received Signal Strength Indication measurement); |
| | identifier of the transmission gap pattern sequence =4 (measurement purpose: GSM Initial Base Station Identity Code Identification); |
| | identifier of the transmission gap pattern sequence =5 (measurement purpose: GSM Base Station Identity Code Identification Reconfirmation) |
| Identifier of the transmission gap pattern sequence combination=10 | The number of members is 4, respectively: |
| | identifier of the transmission gap pattern sequence =2 (measurement purpose: Time-Division Duplex measurement); |
| | identifier of the transmission gap pattern sequence =3 (measurement purpose: GSM Carrier Received Signal Strength Indication measurement); |
| | identifier of the transmission gap pattern sequence =4 (measurement purpose: GSM Initial Base Station Identity Code Identification); |
| | identifier of the transmission gap pattern sequence =5 (measurement purpose: GSM Base Station Identity Code Identification Reconfirmation) |
| | identifier of the transmission gap pattern sequence =6 (measurement purpose: multi-carrier frequency measurement); |
| | identifier of the transmission gap pattern sequence =3 (measurement purpose: GSM Carrier Received Signal Strength Indication measurement); |
| | identifier of the transmission gap pattern sequence =4 (measurement purpose: GSM Initial Base Station Identity Code Identification); |
| | identifier of the transmission gap pattern sequence =5 (measurement purpose: GSM Base Station Identity Code Identification Reconfirmation) |
| Identifier of the transmission gap pattern sequence combination=12 | The number of members is 4, respectively: |
| | identifier of the transmission gap pattern sequence =7 (measurement purpose: E-UTRA measurement); |
| | identifier of the transmission gap pattern sequence =3 (measurement purpose: GSM Carrier Received Signal Strength Indication measurement); |
| | identifier of the transmission gap pattern sequence =4 (measurement purpose: GSM Initial Base Station Identity Code Identification); |
| | identifier of the transmission gap pattern sequence =5 (measurement purpose: GSM Base Station Identity Code Identification Reconfirmation) |
| Identifier of the transmission gap pattern sequence combination=13 | The number of members is 2, respectively: |
| | identifier of the transmission gap pattern sequence =2 (measurement purpose: Time-Division Duplex measurement); |
| | identifier of the transmission gap pattern sequence =1 (measurement purpose: Frequency-Division Duplex measurement) |
| Identifier of the transmission gap pattern sequence combination=14 | The number of members is 2, respectively: |
| | identifier of the transmission gap pattern sequence =2 (measurement purpose: Time-Division Duplex measurement); |
| | identifier of the transmission gap pattern sequence =6 (measurement purpose: multi-carrier frequency measurement) |
| Identifier of the transmission gap pattern sequence combination=15 | The number of members is 2, respectively: |
| | identifier of the transmission gap pattern sequence =1 (measurement purpose: Frequency-Division Duplex measurement); |
| | identifier of the transmission gap pattern sequence =7 (measurement purpose: E-UTRA measurement) |
| Identifier of the transmission gap pattern sequence combination=16 | The number of members is 2, respectively: |
| | identifier of the transmission gap pattern sequence =2 (measurement purpose: Time-Division Duplex measurement); |
| | identifier of the transmission gap pattern sequence =7 (measurement purpose: E-UTRA measurement) |
| Identifier of the transmission gap pattern sequence combination=17 | The number of members is 2, respectively: |
| | identifier of the transmission gap pattern sequence =6 (measurement purpose: multi-carrier frequency measurement) |
| | identifier of the transmission gap pattern sequence =7 (measurement purpose: E-UTRA measurement) |
| Identifier of the transmission gap pattern sequence combination=18 | The number of members is 2, respectively: |
| | identifier of the transmission gap pattern sequence =1 (measurement purpose: Frequency-Division Duplex measurement); |
| | identifier of the transmission gap pattern sequence =3 (measurement purpose: GSM Carrier Received Signal Strength Indication measurement) |
| Identifier of the transmission gap pattern sequence combination=19 | The number of members is 2, respectively: |
| | identifier of the transmission gap pattern sequence =2 (measurement purpose: Time-Division Duplex measurement); |
| | identifier of the transmission gap pattern sequence =3 (measurement purpose: GSM Carrier Received Signal Strength Indication measurement) |
| Identifier of the transmission gap pattern sequence combination=20 | The number of members is 2, respectively: |
| | identifier of the transmission gap pattern sequence =6 (measurement purpose: multi-carrier frequency measurement); |
| | identifier of the transmission gap pattern sequence =3 (measurement purpose: GSM Carrier Received Signal Strength Indication measurement) |
| Identifier of the transmission gap pattern sequence combination=21 | The number of members is 2, respectively: |
| | identifier of the transmission gap pattern sequence =7 (measurement purpose: E-UTRA measurement); |
| | identifier of the transmission gap pattern sequence =3 (measurement purpose: GSM Carrier Received Signal Strength Indication measurement) |

In Table 1, a transmission gap pattern sequence combination comprises at least one transmission gap pattern sequence. According to the embodiment of the present invention, the transmission gap pattern sequences are divided into groups in advance and identifiers of the groups are set. In this way, after the user equipment or the base station determines measurement purposes for measurement, it determines a combination to which the measurement purposes belong and notifies the identifier information of the determined combination to the opposite end. In this way, the base station and the user equipment can execute the measurement purpose corresponding to each transmission gap pattern sequence in the determined transmission gap pattern sequence combination, so that corresponding measurement is realized simultaneously at the base station and user equipment sides. The base station and the user equipment only need to notify the identifier information of the determined transmission gap pattern sequence combination to the opposite end without needing a huge number of computations.

Fig. 2 shows a flow chart of embodiment 1 of a method for indicating a transmission gap pattern sequence in the present invention. As shown in Fig. 2, the embodiment specifically comprises the steps as follows.

Step 110: An RNC configures combination information of transmission gap pattern sequence(s) (contents as shown in Table 1) for a NodeB. The NodeB obtains the combination information of the transmission gap pattern sequence(s) which can be performed in parallel. After the NodeB obtains the combination information of the transmission gap pattern sequence(s), it can also notify the obtained combination information of the transmission gap pattern sequence(s) to a user equipment.

Step 120: The RNC configures combination information of transmission gap pattern sequence(s) (contents as shown in Table 1) for the user equipment (through the NodeB). The user equipment obtains the combination information of the transmission gap pattern sequence(s) which can be performed in parallel.

Step 130: The user equipment starts the transmission gap pattern sequence combination with an identifier 1. Herein, the transmission gap pattern sequence combination started by the user equipment is configured for description. The user equipment notifies the identifier 1 of the started transmission gap pattern sequence combination to the NodeB. According to the identifier 1 of the transmission gap pattern sequence combination, the NodeB analyzes to obtain the transmission gap pattern sequence members in the transmission gap pattern sequence combination: the number of members is 1, identifier of the transmission gap pattern sequence =1 (measurement purpose: Frequency-Division Duplex measurement).

Step 140: The user equipment and the NodeB start the transmission gap pattern sequence in the transmission gap pattern sequence combination with an identifier 1, that is, start the transmission gap pattern sequence with identifier of the transmission gap pattern sequence being 1.

In the embodiment of the present invention, after the user equipment and the base station obtain the identifier of the transmission gap pattern sequence combination and determine the corresponding identifier of the transmission gap pattern sequence in the combination, the user equipment and the base station perform the measurement corresponding to the identifier of the transmission gap pattern sequence in the transmission gap as shown in Fig. 1. Specifically, according to the channel quality information of the UE reported by the NodeB and the specific parameter measurement quantity (see relative measurement quantity in the Background of the Invention part, specifically) determined for the UE, the RNC determines to start/stop the transmission gap pattern sequence. In the embodiment of the present invention, the RNC determines a corresponding transmission gap pattern sequence for each measurement quantity in the current communication system. According to the determined transmission gap pattern sequence(s) and according to various application scenes of the user equipment, the RNC determines transmission gap pattern sequence combinations under different application scenes, sets identifier information for the transmission gap pattern sequence combinations, and notifies the corresponding relation (specifically as shown in Table 1) between the transmission gap pattern sequence combinations and the identifiers of the transmission gap pattern sequence combinations to the NodeB and the UE. After the NodeB and the UE determine the measurement quantity to be measured, the NodeB and the UE determine transmission gap pattern sequence(s) to be started according to a corresponding relation, further determine the transmission gap pattern sequence combination, and notify the corresponding identifier information of the combination to the opposite end. Generally, the corresponding relation between the transmission gap pattern sequence combination and the identifier information of the transmission gap pattern sequence combination is stable and long-term changeless. If the corresponding relation has to be changed, it can be redetermined by the RNC and then notified to the NodeB and the UE.

Of course, the transmission gap pattern sequence combination can be determined according to the simulation result of the RNC in a practical communication system. Specifically, according to the simulated communication environment in the current communication system, the transmission gap pattern sequence corresponding to the measurement quantity of the UE is determined, the transmission gap pattern sequence combination is determined, the identifier of the combination is set, and the information is configured in the UE. It should be understood by those skilled in the art that it is easy to implement determination of the corresponding transmission gap pattern sequence according to the measurement quantity of the UE.

In the embodiment of the present invention, the identifier of the transmission gap pattern sequence follows the identifier set in the existing communication system, only the transmission gap pattern sequence combination and the corresponding identifier information of the combination are reset.

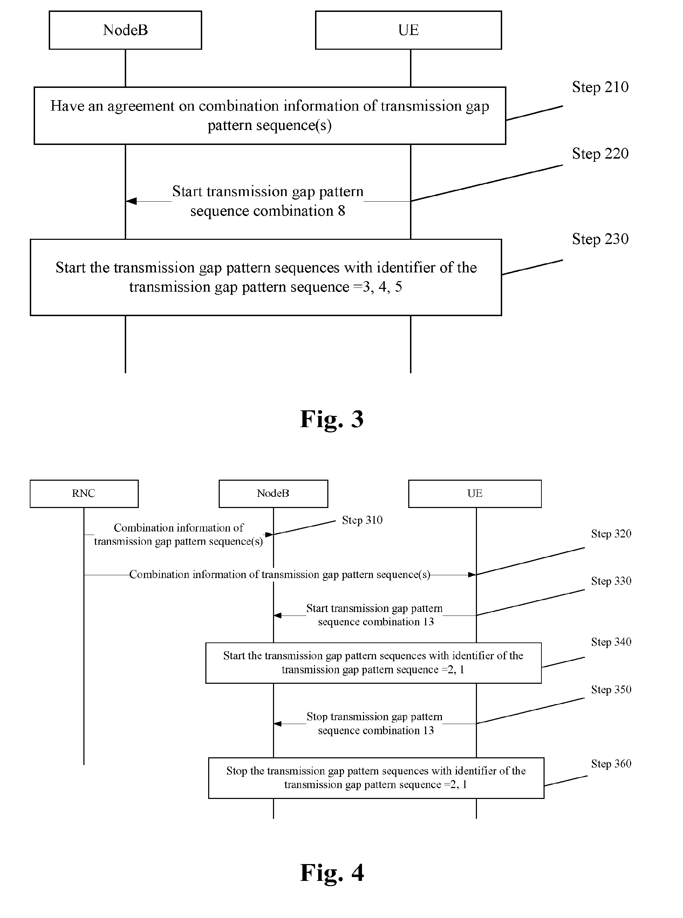

Fig. 3 shows a flow chart of embodiment 2 of a method for indicating a transmission gap pattern sequence in the present invention. As shown in Fig. 3, the embodiment specifically comprises the steps as follows.

Step 210: The combination information of transmission gap pattern sequence(s) (contents as shown in Table 1) is configured for the NodeB and the UE in advance. The NodeB and the UE obtain the combination information of the transmission gap pattern sequence(s) which can be performed in parallel.

Step 220: The UE starts the transmission gap pattern sequence combination with an identifier 8. The UE notifies the identifier 8 of the started transmission gap pattern sequence combination to the NodeB. According to the identifier 8 of the transmission gap pattern sequence combination, the NodeB analyzes to obtain the transmission gap pattern sequence members in the transmission gap pattern sequence combination: the number of members is 3, respectively: identifier of the transmission gap pattern sequence =3 (measurement purpose: GSM Carrier Received Signal Strength Indication measurement); identifier of the transmission gap pattern sequence =4 (measurement purpose: GSM Initial Base Station Identity Code Identification); and identifier of the transmission gap pattern sequence =5 (measurement purpose: GSM Base Station Identity Code Identification Reconfirmation).

Step 230: The UE and the NodeB start the three transmission gap pattern sequences in the transmission gap pattern sequence combination with an identifier 8, that is, start the transmission gap pattern sequences with identifiers of the transmission gap pattern sequences respectively being 3, 4, and 5.

Fig. 4 shows a flow chart of embodiment 3 of a method for indicating a transmission gap pattern sequence in the present invention. As shown in Fig. 4, the embodiment specifically comprises the steps as follows.

Step 310: The RNC configures combination information of transmission gap pattern sequence(s) (contents as shown in Table 1) for the NodeB. The NodeB obtains the combination information of the transmission gap pattern sequence(s) which can be performed in parallel.

Step 320: The RNC configures combination information of transmission gap pattern sequence(s) (contents as shown in Table 1) for the UE (through the NodeB). The UE obtains the combination information of the transmission gap pattern sequence(s) which can be performed in parallel.

Step 330: The UE starts the transmission gap pattern sequence combination with an identifier 13. The UE notifies the identifier 13 of the started transmission gap pattern sequence combination to the NodeB. According to the identifier 13 of the transmission gap pattern sequence combination, the NodeB analyzes to obtain the transmission gap pattern sequence members in the transmission gap pattern sequence combination: the number of members is 2, respectively: identifier of the transmission gap pattern sequence =2 (measurement purpose: Time-Division Duplex measurement); identifier of the transmission gap pattern sequence =1 (measurement purpose: Frequency-Division Duplex measurement).

Step 340: The UE and the NodeB start the two transmission gap pattern sequences in the transmission gap pattern sequence combination with an identifier 13, that is, start the transmission gap pattern sequences with identifiers of the transmission gap pattern sequences respectively being 1 and 2.

Step 350: The UE stops the transmission gap pattern sequence combination with an identifier 13. The UE notifies the identifier 13 of the stopped transmission gap pattern sequence combination to the NodeB. According to the identifier 13 of the transmission gap pattern sequence combination, the NodeB analyzes to obtain the transmission gap pattern sequence members in the transmission gap pattern sequence combination: the number of members is 2, respectively: identifier of the transmission gap pattern sequence =2 (measurement purpose: Time-Division Duplex measurement); identifier of the transmission gap pattern sequence =1 (measurement purpose: Frequency-Division Duplex measurement).

Step 360: The UE and the NodeB stop the two transmission gap pattern sequences in the transmission gap pattern sequence combination with an identifier 13, that is, stop the transmission gap pattern sequences with identifiers of the transmission gap pattern sequences respectively being 1 and 2.

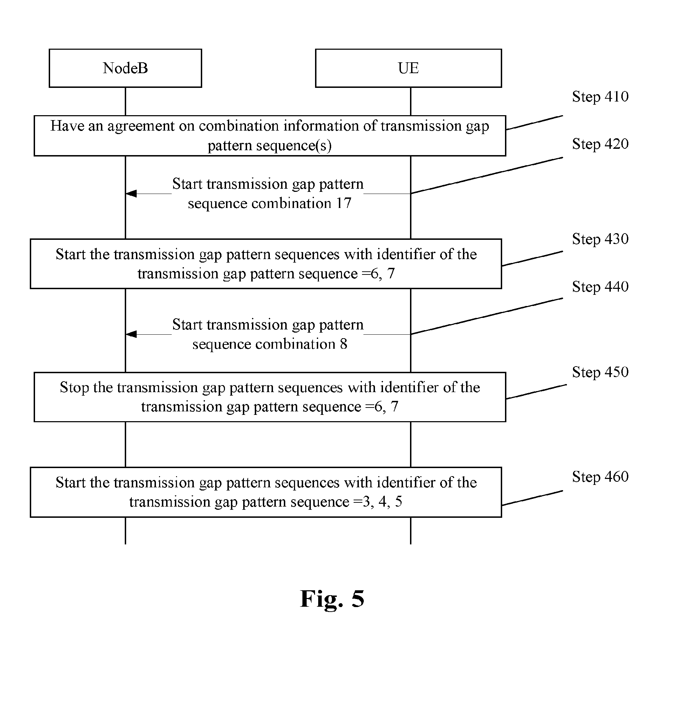

Fig. 5 shows a flow chart of embodiment 4 of a method for indicating a transmission gap pattern sequence in the present invention. As shown in Fig. 5, the embodiment specifically comprises the steps as follows.

Step 410: The combination information of transmission gap pattern sequence(s) (contents as shown in Table 1) is configured for the NodeB and the UE in advance. The NodeB and the UE obtain the combination information of the transmission gap pattern sequence(s) which can be performed in parallel.

Step 420: The UE starts the transmission gap pattern sequence combination with an identifier 17. The UE notifies the identifier 17 of the started transmission gap pattern sequence combination to the NodeB. According to the identifier 17 of the transmission gap pattern sequence combination, the NodeB analyzes to obtain the transmission gap pattern sequence members in the transmission gap pattern sequence combination: the number of members is 2, respectively: identifier of the transmission gap pattern sequence =6 (measurement purpose: multi-carrier frequency measurement); identifier of the transmission gap pattern sequence =7 (measurement purpose: E-UTRA measurement).

Step 430: The UE and the NodeB start the two transmission gap pattern sequences in the transmission gap pattern sequence combination with an identifier 17, that is, start the transmission gap pattern sequences with identifiers of the transmission gap pattern sequences respectively being 6 and 7.

Step 440: The UE starts the transmission gap pattern sequence combination with an identifier 8. The UE notifies the identifier 8 of the started transmission gap pattern sequence combination to the NodeB. According to the identifier 8 of the transmission gap pattern sequence combination, the NodeB analyzes to obtain the transmission gap pattern sequence members in the transmission gap pattern sequence combination: the number of members is 3, respectively: identifier of the transmission gap pattern sequence =3 (measurement purpose: GSM Carrier Received Signal Strength Indication measurement); identifier of the transmission gap pattern sequence =4 (measurement purpose: GSM Initial Base Station Identity Code Identification); and identifier of the transmission gap pattern sequence =5 (measurement purpose: GSM Base Station Identity Code Identification Reconfirmation).

Step 450: There is a transmission gap pattern sequence combination started currently, the identifier of which is 17. The UE and the NodeB stop the two transmission gap pattern sequences in the transmission gap pattern sequence combination with an identifier 17, that is, stop the transmission gap pattern sequences with identifiers of the transmission gap pattern sequences respectively being 6 and 7.

Step 460: The UE and the NodeB start the three transmission gap pattern sequences in the transmission gap pattern sequence combination with an identifier 8, that is, start the transmission gap pattern sequences with identifiers of the transmission gap pattern sequences respectively being 3, 4 and 5.

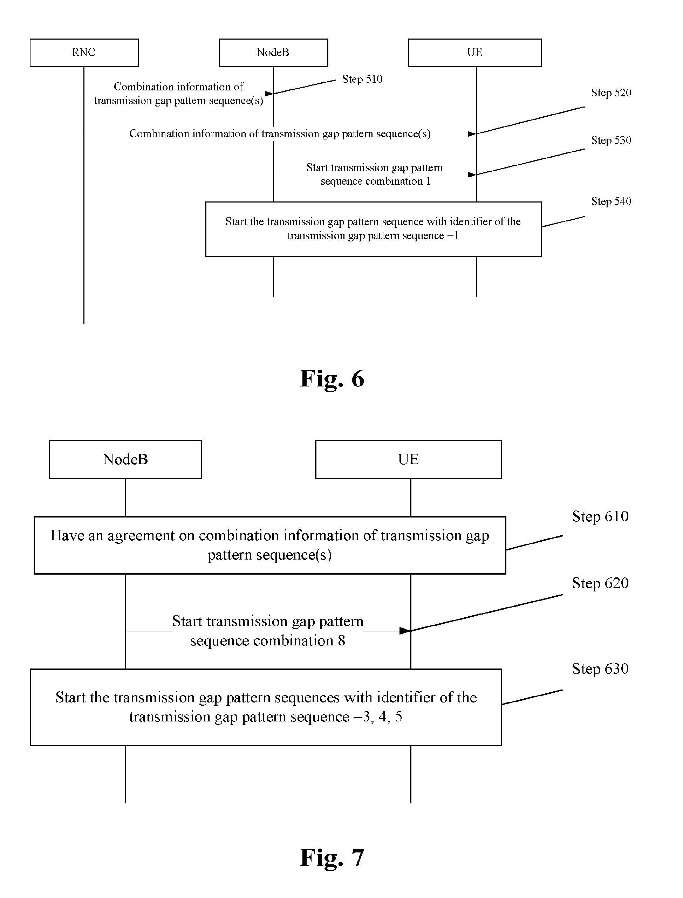

Fig. 6 shows a flow chart of embodiment 5 of a method for indicating a transmission gap pattern sequence in the present invention. As shown in Fig. 6, the embodiment specifically comprises the steps as follows.

Step 510: The RNC configures combination information of transmission gap pattern sequence(s) (contents as shown in Table 1) for the NodeB. The NodeB obtains the combination information of the transmission gap pattern sequence(s) which can be performed in parallel.

Step 520: The RNC configures combination information of transmission gap pattern sequence(s) (contents as shown in Table 1) for the UE (through the NodeB). The UE obtains the combination information of the transmission gap pattern sequence(s) which can be performed in parallel.

Step 530: The NodeB starts the transmission gap pattern sequence combination with an identifier 1. The NodeB notifies the identifier 1 of the started transmission gap pattern sequence combination to the UE. According to the identifier 1 of the transmission gap pattern sequence combination, the UE analyzes to obtain the transmission gap pattern sequence members in the transmission gap pattern sequence combination: the number of members is 1, identifier of the transmission gap pattern sequence =1 (measurement purpose: Frequency-Division Duplex measurement).

Step 540: The UE and the NodeB start the transmission gap pattern sequence in the transmission gap pattern sequence combination with an identifier 1, that is, start the transmission gap pattern sequence with identifier of the transmission gap pattern sequence being 1.

Fig. 7 shows a flow chart of embodiment 6 of a method for indicating a transmission gap pattern sequence in the present invention. As shown in Fig. 7, the embodiment specifically comprises the steps as follows.

Step 610: The combination information of transmission gap pattern sequence(s) (contents as shown in Table 1) is configured for the NodeB and the UE in advance. The NodeB and the UE obtain the combination information of the transmission gap pattern sequence(s) which can be performed in parallel.

Step 620: The NodeB starts the transmission gap pattern sequence combination with an identifier 8. The NodeB notifies the identifier 8 of the started transmission gap pattern sequence combination to the UE. According to the identifier 8 of the transmission gap pattern sequence combination, the UE analyzes to obtain the transmission gap pattern sequence members in the transmission gap pattern sequence combination: the number of members is 3, respectively: identifier of the transmission gap pattern sequence =3 (measurement purpose: GSM Carrier Received Signal Strength Indication measurement); identifier of the transmission gap pattern sequence =4 (measurement purpose: GSM Initial Base Station Identity Code Identification); and identifier of the transmission gap pattern sequence =5 (measurement purpose: GSM Base Station Identity Code Identification Reconfirmation).

Step 630: The UE and the NodeB start the three transmission gap pattern sequences in the transmission gap pattern sequence combination with an identifier 8, that is, start the transmission gap pattern sequences with identifiers of the transmission gap pattern sequences respectively being 3, 4 and 5.

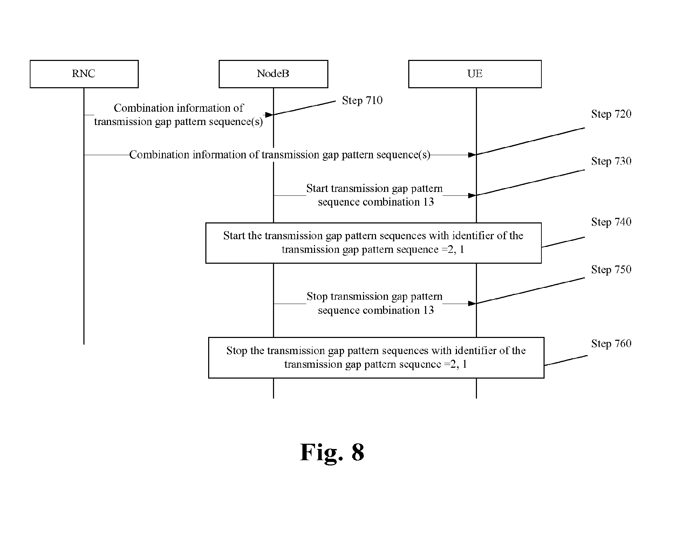

Fig. 8 shows a flow chart of embodiment 7 of a method for indicating a transmission gap pattern sequence in the present invention. As shown in Fig. 8, the embodiment specifically comprises the steps as follows.

Step 710: The RNC configures combination information of transmission gap pattern sequence(s) (contents as shown in Table 1) for the NodeB. The NodeB obtains the combination information of the transmission gap pattern sequence(s) which can be performed in parallel.

Step 720: The RNC configures combination information of transmission gap pattern sequence(s) (contents as shown in Table 1) for the UE (through the NodeB). The UE obtains the combination information of the transmission gap pattern sequence(s) which can be performed in parallel.

Step 730: The NodeB starts the transmission gap pattern sequence combination with an identifier 13. The NodeB notifies the identifier 13 of the started transmission gap pattern sequence combination to the UE. According to the identifier 13 of the transmission gap pattern sequence combination, the UE analyzes to obtain the transmission gap pattern sequence members in the transmission gap pattern sequence combination: the number of members is 2, respectively: identifier of the transmission gap pattern sequence =2 (measurement purpose: Time-Division Duplex measurement); identifier of the transmission gap pattern sequence =1 (measurement purpose: Frequency-Division Duplex measurement).

Step 740: The UE and the NodeB start the two transmission gap pattern sequences in the transmission gap pattern sequence combination with an identifier 13, that is, start the transmission gap pattern sequences with identifiers of the transmission gap pattern sequences respectively being 2 and 1.

Step 750: The NodeB stops the transmission gap pattern sequence combination with an identifier 13. The NodeB notifies the identifier 13 of the stopped transmission gap pattern sequence combination to the UE. According to the identifier 13 of the transmission gap pattern sequence combination, the UE analyzes to obtain the transmission gap pattern sequence members in the transmission gap pattern sequence combination: the number of members is 2, respectively: identifier of the transmission gap pattern sequence =2 (measurement purpose: Time-Division Duplex measurement); identifier of the transmission gap pattern sequence =1 (measurement purpose: Frequency-Division Duplex measurement).

Step 760: The UE and the NodeB stop the two transmission gap pattern sequences in the transmission gap pattern sequence combination with an identifier 13, that is, stop the transmission gap pattern sequences with identifiers of the transmission gap pattern sequences respectively being 2 and 1.

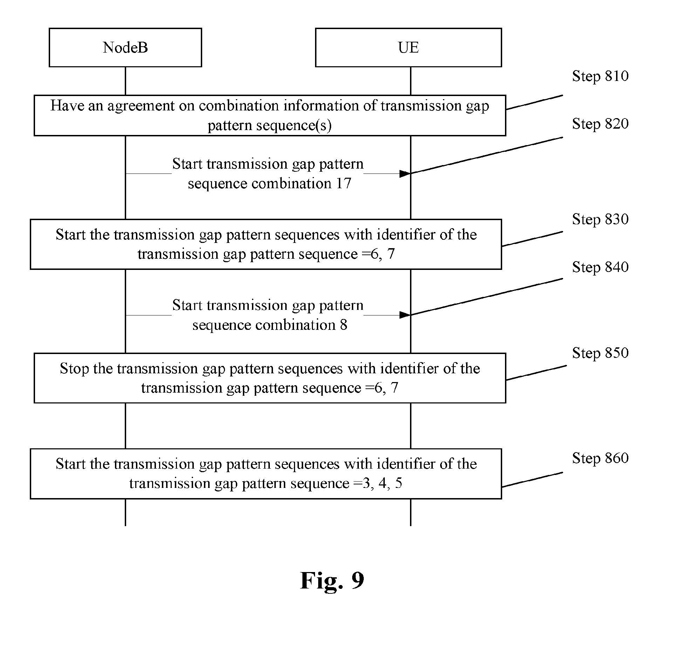

Fig. 9 shows a flow chart of embodiment 8 of a method for indicating a transmission gap pattern sequence in the present invention. As shown in Fig. 9, the embodiment specifically comprises the steps as follows.

Step 810: The combination information of transmission gap pattern sequence(s) (contents as shown in Table 1) is configured for the NodeB and the UE in advance. The NodeB and the UE obtain the combination information of the transmission gap pattern sequence(s) which can be performed in parallel.

Step 820: The NodeB starts the transmission gap pattern sequence combination with an identifier 17. The NodeB notifies the identifier 17 of the started transmission gap pattern sequence combination to the UE. According to the identifier 17 of the transmission gap pattern sequence combination, the UE analyzes to obtain the transmission gap pattern sequence members in the transmission gap pattern sequence combination: the number of members is 2, respectively: identifier of the transmission gap pattern sequence =6 (measurement purpose: multi-carrier frequency measurement); identifier of the transmission gap pattern sequence =7 (measurement purpose: E-UTRA measurement).

Step 830: The UE and the NodeB start the two transmission gap pattern sequences in the transmission gap pattern sequence combination with an identifier 17, that is, start the transmission gap pattern sequences with identifiers of the transmission gap pattern sequences respectively being 6 and 7.

Step 840: The NodeB starts the transmission gap pattern sequence combination with an identifier 8. The NodeB notifies the identifier 8 of the started transmission gap pattern sequence combination to the UE. According to the identifier 8 of the transmission gap pattern sequence combination, the UE analyzes to obtain the transmission gap pattern sequence members in the transmission gap pattern sequence combination: the number of members is 3, respectively: identifier of the transmission gap pattern sequence =3 (measurement purpose: GSM Carrier Received Signal Strength Indication measurement); identifier of the transmission gap pattern sequence =4 (measurement purpose: GSM Initial Base Station Identity Code Identification); and identifier of the transmission gap pattern sequence =5 (measurement purpose: GSM Base Station Identity Code Identification Reconfirmation).

Step 850: There is a transmission gap pattern sequence combination started currently, the identifier of which is 17. The UE and the NodeB stop the two transmission gap pattern sequences in the transmission gap pattern sequence combination with an identifier 17, that is, stop the transmission gap pattern sequences with identifiers of the transmission gap pattern sequences respectively being 6 and 7.

Step 860: The UE and the NodeB start the three transmission gap pattern sequences in the transmission gap pattern sequence combination with an identifier 8, that is, start the transmission gap pattern sequences with identifiers of the transmission gap pattern sequences respectively being 3, 4 and 5.

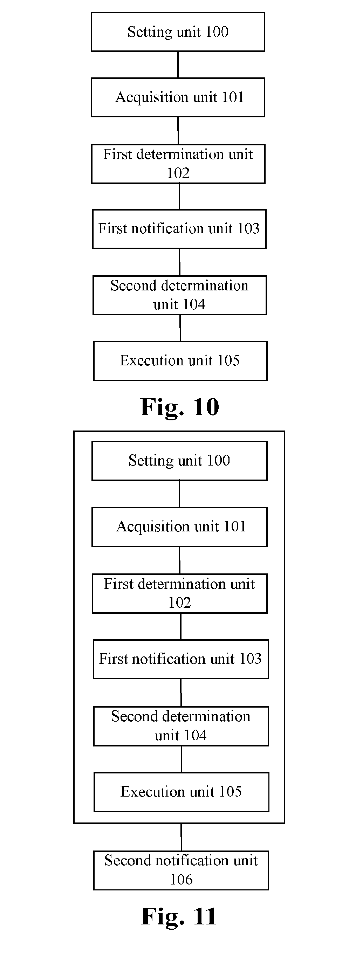

Fig. 10 shows a constitutional structure diagram of embodiment 1 of a system for indicating a transmission gap pattern sequence in the present invention. As shown in Fig. 10, the system for indicating a transmission gap pattern sequence in the embodiment of the present invention is applied in a radio communication system and comprises: a setting unit 100, an acquisition unit 101, a first determination unit 102, a first notification unit 103, a second determination unit 104 and an execution unit 105; wherein,
the setting unit 100 is configured to set a transmission gap pattern sequence combination and an identifier of the transmission gap pattern sequence combination;
the acquisition unit 101 is configured to acquire a corresponding relation between the transmission gap pattern sequence combination and the identifier of the transmission gap pattern sequence combination;
the first determination unit 102 is configured to trigger the first notification unit 103 when one of the two communication parties determines to start/stop a transmission gap pattern sequence combination;
the first notification unit 103 is configured to notify the identifier of the transmission gap pattern sequence combination to be started/stopped to the other one of the two communication parties;
the second determination unit 104 is configured to, according to the identifier of the determined transmission gap pattern sequence combination, determine each transmission gap pattern sequence in the transmission gap pattern sequence combination notified by the first notification unit 103; and
the execution unit 105 is configured to start/stop each transmission gap pattern sequence, determined by the second determination unit 104, in the transmission gap pattern sequence combination.

Fig. 11 shows a constitutional structure diagram of embodiment 2 of a system for indicating a transmission gap pattern sequence in the present invention. As shown in Fig. 11, based on the system shown in Fig. 10, the system for indicating a transmission gap pattern sequence in the embodiment of the present invention further comprises:
a second notification unit 106, arranged in a radio network controller, configured to notify the corresponding relation between the transmission gap pattern sequence combination and the identifier of the transmission gap pattern sequence combination set by the setting unit 100 to the two communication parties. Wherein, one of the two communication parties is a UE and the other one is a base station.

There are one or more transmission gap pattern sequences in the transmission gap pattern sequence combination.

The execution unit 105 is further configured to: during a process of staring a transmission gap pattern sequence in the transmission gap pattern sequence combination, when the UE and the base station receive startup of other transmission gap pattern sequence combination through the first notification unit 103, stop a current transmission gap pattern sequence.

It should be understood by those skilled in the art that, the system for indicating a transmission gap pattern sequence in the embodiment of the present invention is designed to implement the foregoing method for indicating a transmission gap pattern sequence in the embodiment of the present invention, and the implemented functions of each processing unit can be understood with reference to relative descriptions of the foregoing method. Functions of each processing unit in the drawings can be implemented by running programs in a processor, and also can be implemented through specific logic circuits.

The above contents only describe the preferable embodiments of the present invention and are not used for limiting the protection scope of the present invention.

## Claims

1. A method for indicating a transmission gap pattern sequence, **characterized in that** two communication parties acquire a configured corresponding relation between a transmission gap pattern sequence combination and an identifier of the transmission gap pattern sequence combination; the method comprises:
when one of the two communication parties determines to start/stop a transmission gap pattern sequence, determining a transmission gap pattern sequence combination to be started/stopped and notifying the identifier of the determined transmission gap pattern sequence combination to be started/stopped to the other one of the two communication parties; according to the identifier of the determined transmission gap pattern sequence combination, the other communication party starting/stopping each transmission gap pattern sequence in the corresponding transmission gap pattern sequence combination.

2. The method according to claim 1, **characterized in that** the step that two communication parties acquire the configured corresponding relation between the transmission gap pattern sequence combination and the identifier of the transmission gap pattern sequence combination comprises:
a radio network controller determining a transmission gap pattern sequence, configuring the corresponding relation between the transmission gap pattern sequence combination and the identifier of the transmission gap pattern sequence combination, and notifying the corresponding relation to the two communication parties in advance.

3. The method according to claim 1, **characterized in that** one of the two communication parties is a user equipment and the other one of the two communication parties is a base station;
when determining to start/stop the transmission gap pattern sequence combination, the user equipment notifies the identifier of the transmission gap pattern sequence combination to be started/stopped to the base station; according to the identifier of the transmission gap pattern sequence combination, the base station determines each transmission gap pattern sequence in the transmission gap pattern sequence combination notified by the user equipment, and starts/stops each transmission gap pattern sequence in the transmission gap pattern sequence combination notified by the user equipment.

4. The method according to claim 1, **characterized in that** one of the two communication parties is a base station and the other one of the two communication parties is a user equipment;
when determining to start/stop the transmission gap pattern sequence combination, the base station notifies the identifier of the transmission gap pattern sequence combination to be started/stopped to the user equipment; according to the identifier of the transmission gap pattern sequence combination, the user equipment determines each transmission gap pattern sequence in the transmission gap pattern sequence combination notified by the base station, and starts/stops each transmission gap pattern sequence in the transmission gap pattern sequence combination notified by the base station.

5. The method according to any one of claims 1 to 4, **characterized in that** there is one or more transmission gap pattern sequences in the transmission gap pattern sequence combination.

6. The method according to claim 5, **characterized by** further comprising:
during a process that a base station and a user equipment start a transmission gap pattern sequence in the transmission gap pattern sequence combination, when receiving startup of other transmission gap pattern sequence combination, stopping each transmission gap pattern sequence in a current transmission gap pattern sequence combination.

7. A system for indicating a transmission gap pattern sequence, applied in a radio communication system, **characterized in that** the system comprises: a setting unit, and an acquisition unit, a first determination unit, a first notification unit, a second determination unit and an execution unit, which are arranged in two communication parties in the radio communication system; wherein,
the setting unit is configured to set a transmission gap pattern sequence combination and an identifier of the transmission gap pattern sequence combination;
the acquisition unit is configured to acquire a corresponding relation between the transmission gap pattern sequence combination and the identifier of the transmission gap pattern sequence combination;
the first determination unit is configured to trigger the first notification unit when one of the two communication parties determines to start/stop a transmission gap pattern sequence combination;
the first notification unit is configured to notify the identifier of the transmission gap pattern sequence combination to be started/stopped to the other one of the two communication parties;
the second determination unit is configured to: according to the identifier of the transmission gap pattern sequence combination, determine each transmission gap pattern sequence in the transmission gap pattern sequence combination notified by the first notification unit; and
the execution unit is configured to start/stop each transmission gap pattern sequence, determined by the second determination unit, in the transmission gap pattern sequence combination.

8. The system according to claim 7, **characterized by** further comprising:
a second notification unit, arranged in a radio network controller, configured to notify the corresponding relation between the transmission gap pattern sequence combination and the identifier of the transmission gap pattern sequence combination set by the setting unit to the two communication parties; and one of the two communication parties is a user equipment and the other one of the two communication parties is a base station.

9. The system according to claim 7 or 8, **characterized in that** there is one or more transmission gap pattern sequences in the transmission gap pattern sequence combination.

10. The system according to claim 9, **characterized in that** the execution unit is further configured to: during a process of starting a transmission gap pattern sequence in the transmission gap pattern sequence combination, when a user equipment and a base station receive startup of other transmission gap pattern sequence combination through the first notification unit, stop a current transmission gap pattern sequence.
